# EUROPEAN PATENT SPECIFICATION

(11) **EP 2 642 850 B1**
(45) Date of publication and mention of the grant of the patent: **14.09.2016**
(21) Application number: 11793702.9
(22) Date of filing: 23.11.2011
(51) Int. Cl.: A01N 25/04, A01N 25/22, A01N 43/56, A01N 43/653, A01N 43/84

(54) **WATERLESS COMPOSITION COMPRISING PESTICIDE AND COPOLYMERS WITH SULFONIC ACID GROUPS**
WASSERFREIE ZUSAMMENSETZUNG MIT EINEM PESTIZID UND COPOLYMEREN MIT SULFONSÄUREGUPPEN
COMPOSITION ANHYDRE COMPRENANT UN PESTICIDE ET DES COPOLYMÈRES PRÉSENTANT DES GROUPES ACIDE SULFONIQUE

(30) Priority: 25.11.2010 US 417237 P; 25.11.2010 EP 10192549
(43) Date of publication of application: 02.10.2013
(73) Proprietor: BASF SE, 67056 Ludwigshafen am Rhein (DE)
(72) Inventor: MERTOGLU, Murat, 67063 Ludwigshafen (DE); MAYER, Winfried, 55270 Bubenheim (DE); DIELEMAN, Cedric, F-67630 Scheibenhard (FR)
(74) Representative: BASF IP Association
(86) International application number: PCT/EP2011/070760
(87) International publication number: WO 2012/069514

(56) References cited:
- WO-A1-2008/040786
- WO-A2-2010/063672

## Description

The present invention provides a composition comprising
a) at least 1 % by weight of copolymer synthesized from monomers M comprising
   i) at least one ethylenically unsaturated monomer M1 containing sulfonic acid groups,
   ii) at least one monomer M2 selected from C₁-C₄ alkyl (meth)acrylates, and
   iii) at least one monomer M3 selected from C₆-C₂₂ alkyl (meth)acrylates;
b) at least 10% by weight of organic solvent;
c) not more than 10% by weight of water;
d) at least 1 % by weight of water-insoluble pesticide in dissolved from, wherein the water-insoluble pesticide has a solubility in water of up to and including 10 g/l at 20 °C; and
e) at least 1 % by weight of nonionic surfactant.

Further provided is a process for preparing this composition by contacting the copolymer, the organic solvent, the water-insoluble pesticide, and the nonionic surfactant. The invention relates additionally to a method for controlling phytopathogenic fungi and/or unwanted plant growth and/or unwanted insect or mite infestation and/or for regulating the growth of plants, wherein the composition is caused to act on the respective pests, their habitat or the plants to be protected from the respective pest, to the soil and/or to unwanted plants and/or the crop plants and/or their habitat. The invention further relates to seed comprising the composition. Combinations of preferred features with other preferred features are encompassed by the present invention.

Agrochemical formulations comprising copolymers with sulfonic acid groups are common knowledge.

WO 2010/063672 discloses agrochemical compositions comprising an active agrochemical ingredient and a copolymer which is obtainable by polymerization in a specific solvent mixture comprising an olefinically unsaturated sulfonic acid and at least two structurally different acrylic acid derivatives.

WO2006/111327 discloses a preparation comprising a conazole fungicide, a further pesticide, and a copolymer synthesized from a neutral monomer and from a monomer containing sulfonic acid groups.

Stabilizing water-insoluble pesticides in agrochemical formulations is difficult. In liquid formulations in particular, the pesticides tend to crystallize, especially at low temperatures. It is also hard to formulate high concentrations of water-insoluble pesticides. Often times the required crystallization inhibitors are soluble in the formulations only at low concentrations. It was an object of the present invention to resolve these drawbacks.

The object has been achieved by means of a composition comprising
a) at least 1 % by weight of copolymer synthesized from monomers M comprising
   i) at least one ethylenically unsaturated monomer M1 containing sulfonic acid groups,
   ii) at least one monomer M2 selected from C₁-C₄ alkyl (meth)acrylates, and
   iii) at least one monomer M3 selected from C₆-C₂₂ alkyl (meth)acrylates;
b) at least 10% by weight of organic solvent;
c) not more than 10% by weight of water;
d) at least 1 % by weight of water-insoluble pesticide in dissolved from, wherein the water-insoluble pesticide has a solubility in water of up to and including 10 g/l at 20 °C; and
e) at least 1 % by weight of nonionic surfactant.

Suitable ethylenically unsaturated **monomers M1** containing **sulfonic acid groups** are those of the formula (I), 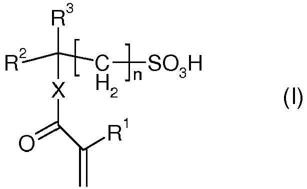 where
- n: is 0 to 10;
- X: is O or NR⁵;
- R¹: is hydrogen or methyl;
- R² and R³: independently of one another are hydrogen or C₁ to C₆ alkyl; and
- R⁵: is hydrogen, alkyl, aryl, alkylaryl, arylalkyl, alkoxyalkyl, aryloxyalkyl, alkoxyaryl, hydroxyalkyl, (di)alkylaminoalkyl, (di)alkylaminoaryl, (di)arylaminoalkyl, alkylarylaminoalkyl or alkylarylaminoaryl, it being possible for the aryl radicals to be singly or multiply substituted,
salts thereof, or mixtures of acid and salts.

X is preferably O or NH. R² and R³ are independently of one another preferably hydrogen or methyl. Preferably n is 1. Salts of the sulfonic acids and other acids are preferably metal salts, more particularly alkali metal salts, such as lithium, sodium, and potassium salts, or ammonium salts.

Particularly preferred monomers M1 are 2-acrylamido-2-methylpropanesulfonic acid (AMPS) (Ia) (i.e., formula (I) where X=NH, R¹=hydrogen, R²=R³=methyl, and n=1) 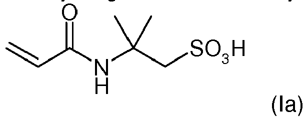 and 2-sulfoethyl methacrylate (SEMA) (Ib) (i.e., formula (I) where X=oxygen, R¹=methyl, R²=R³=hydrogen, and n=1).

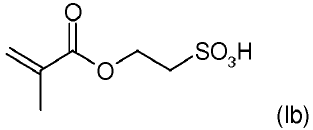

The monomer M1 is, especially, 2-acrylamido-2-methylpropanesulfonic acid (AMPS).

The sulfonic acid group may be present in acid form or salt form or as a mixture of acid form and salt form, the **acid form** being preferred. An alternative option is to use the salt form of the monomers and to carry out subsequent, partial or complete, protonation of the acid groups of the monomer units installed in the polymer, or to use the acid form of the monomers and to carry out subsequent, partial or complete, neutralization of the acid groups of the monomer units installed in the polymer. Used as a representative of all of these forms is the term "sulfonic acid" or "acid".

The **monomers M2** are selected from **C₁-C₄ alkyl (meth)acrylates,** such as methyl, ethyl, propyl, isopropyl, n-butyl, isobutyl, or tert-butyl acrylate, or methyl, ethyl, propyl, isopropyl, n-butyl, isobutyl or tert-butyl methacrylate. The expression "(meth)acrylate" may denote acrylate, methacrylate or mixtures of acrylate and methacrylate. Preferred monomers M2 are C₁-C₂ alkyl (meth)acrylates. In another preferred embodiment, C₁-C₄ alkyl methacrylates are suitable, more particularly methyl or ethyl methacrylate, especially methyl methacrylate. Mixtures of the aforementioned monomers can also be used.

The **monomers M3** are selected from **C₆-C₂₂ alkyl (meth)acrylates,** where the alkyl radicals may be octyl, 2-ethylhexyl, decyl, isodecyl, undecyl, dodecyl, tridecyl, tetradecyl, pentadecyl, hexadecyl, heptadecyl, octadecyl and/or eicosyl. The alkyl radicals may be linear or branched, and are preferably linear. Preferred alkyl radicals are those with a chain length of C₈ to C₂₀ alkyl, more preferably of C₁₀ to C₁₈ alkyl, more particularly of C₁₁ to C₁₅ alkyl, and especially of C₁₂ to C₁₄ alkyl. Mixtures of the aforementioned C₆-C₂₂ alkyl (meth)acrylates are likewise suitable, and mixtures of at least two different C₆-C₂₂ alkyl (meth)acrylates are preferred. The expression "(meth)acrylate" may denote acrylate, methacrylate or mixtures of acrylate and methacrylate, with C₆-C₂₂ alkyl acrylates being preferred. The monomers M preferably comprise at least two monomers M3 (i.e., two structurally different monomers M3).

The monomers M comprise preferably
i) at least one monomer M1 of the formula (I),
ii) at least one monomer M2 selected from C₁-C₄ alkyl (meth)acrylates, and
iii) at least one monomer M3 selected from C₈-C₂₀ alkyl (meth)acrylates.

The monomers M comprise more preferably
i) at least one monomer M1 selected from AMPS and/or SEMA,
ii) at least one monomer M2 selected from C₁-C₄ alkyl (meth)acrylates, and
iii) at least one monomer M3 selected from C₈-C₂₀ alkyl (meth)acrylates.

In another particularly preferred embodiment the monomers M comprise
i) at least one monomer M1 of the formula (I),
ii) at least one monomer M2 selected from C₁-C₂ alkyl (meth)acrylates, and
iii) at least one monomer M3 selected from C₁₀-C₁₈ alkyl (meth)acrylates.

In another particularly preferred embodiment the monomers M comprise
i) at least one monomer M1 of the formula (I),
ii) at least one monomer M2 selected from C₁-C₂ alkyl (meth)acrylates, and
iii) at least two monomers M3 selected from C₁₀-C₁₈ alkyl (meth)acrylates.

The copolymers obtainable in accordance with the invention generally have an average **molar weight** M_{w} in the range from 1000 to 100 000 g/mol, preferably 2000 to 50 000 g/mol, more preferably 2000 to 30 000 g/mol. The average molar weight M_{N} is generally in the range from 1000 to 50 000 g/mol, preferably 1000 to 15 000 g/mol, more particularly 2000 to 8000 g/mol.

The proportion of the monomers M in the copolymer is usually at least 85% by weight, preferably at least 90% by weight, more particularly at least 95% by weight, and especially at least 98% by weight. The copolymer may optionally comprise free-radical initiator molecules.

Besides the monomers M1, M2, and M3, the copolymer synthesized from ethylenically unsaturated monomers M may comprise **other monomers M4.** Other monomers may be any ethylenically unsaturated monomers. Typically they are those which are free-radically copolymerizable. The monomers M typically comprise not more than 15% by weight of monomers M4, preferably not more than 10% by weight, more preferably not more than 5% by weight, and more particularly not more than 2% by weight.

The monomers M typically comprise from 1 % to 60% by weight, preferably from 5% to 50% by weight, and more particularly preferably from 10% to 40% by weight of monomer M1, based on the total weight of the monomers M.

The monomers M typically comprise from 10% to 90% by weight, preferably from 20% to 80% by weight, more preferably from 20% to 70% by weight, and especially from 40% to 60% by weight of monomer M2, based on the total weight of the monomers M.

The monomers M typically comprise from 1 % to 50% by weight, preferably from 5% to 30% by weight, and more particularly preferably from 10% to 25% by weight of monomer M3, based on the total weight of the monomers M.

The monomers M preferably comprise
i) 1 % to 60% by weight of monomer M1,
ii) 10% to 90% by weight of monomer M2, and
iii) 1% to 50% by weight of monomer M3,
based on the total weight of the monomers M.

The monomers M more preferably comprise
i) 5% to 50% by weight of monomer M1,
ii) 20% to 70% by weight of monomer M2, and
iii) 5% to 30% by weight of monomer M3,
based on the total weight of the monomers M.

The monomers M very preferably comprise
i) 10% to 40% by weight of monomer M1,
ii) 40% to 70% by weight of monomer M2, and
iii) 10% to 25% by weight of monomer M3,
based on the total weight of the monomers M.

The % by weight fractions of all the monomers M add up typically to 100% by weight.

The copolymer may be provided by known preparation processes, as described in WO 2005/046328 or WO 2006/111327, for example.

The copolymer is preferably obtained by free-radical polymerization of the monomers M either (i) in a solvent mixture composed of water and at least one organic solvent having a boiling point < 140°C or (ii) in one or more pure alcohols. The typical processes of free or controlled, preferably free, radical polymerization may be used, the reaction mixture comprising at least one initiator. The solvent mixture is preferably selected such that the monomers and also the copolymer formed are soluble. Soluble here, in the sense of the invention, encompasses not only a true solution but also a dispersion which is so finely divided that there is no clouding produced. The polymerization may be carried out as a batch reaction, in a semibatch procedure or in a continuous procedure. The polymerization is usually carried out in solution.

The reaction times are situated generally in the range between 1 and 48 h, preferably in the range from 2 to 24 h, and with more particular preference in the range from 4 to 24 h. The temperature range within which the reaction can be carried out extends generally from 20 to 200°C, preferably from 30 to 120°C, and with more particular preference from 40 to 70°C.

As initiators for the free-radical polymerization, typical radical-forming substances are used. The initiator is selected preferably from the group of the azo compounds, the peroxide compounds or the hydroperoxide compounds. Examples include acetyl peroxide, benzoyl peroxide, lauroyl peroxide, tert-butyl peroxyisobutyrate, caproyl peroxide, cumene hydroperoxide, azo-bis(isobutyronitrile), 2,2-azobis(2-methylbutyronitrile), 2,2'-azobis(2-methylpropionamidine) dihydrochloride, and 2,2'-azobis[2-(2-imidazolin-2-yl)propane]dihydrochloride. It will be appreciated that initiator mixtures can also be used.

According to a first variant of the process of the invention, the polymerization is carried out in a solvent mixture comprising water and at least one water-soluble organic solvent having a boiling point of less than 140°C (variant (i)). Variant (i) is preferred.

According to another variant of the process of the invention, the polymerization is carried out in one or more pure alcohols (variant (ii)).

Solvent mixture "comprising water" means in the context of the invention that in the reaction mixture there is at least 1 % by weight of water, based on the total weight of all of the substances forming part of the process. Preferably there is 1 % to 80%, more preferably 1 % to 50%, very preferably 1% to 30%, and more particularly 5% to 30% by weight of water present.

Suitable organic solvents include in principle all solvents having a boiling point of less than 140°C. Preferred solvents are those which are miscible with water and have a boiling point ≤ 120°C. Particularly preferred organic solvents are alcohols, ethers, and nitriles. Examples of particularly preferred alcohols include methanol, ethanol, n-propanol (1-propanol), isopropanol (2-propanol), n-butanol (1-butanol), sec-butanol (2-butanol), tert-butanol (2-methylpropan-2-ol), 1-pentanol, 2-pentanol, 3-pentanol, 2-methylbutanol, 3-methylbutan-2-ol and 2,2-dimethylpropanol. Especially preferred alcohols are methanol, ethanol, n-propanol (1-propanol), and isopropanol (2-propanol). More particular preference is given to isopropanol (2-propanol).

Suitable ethers include in principle all simple or mixed ethers which are obtainable by reaction of the aforementioned alcohols. Further suitable are cyclic ethers, such as tetrahydrofuran, tetrahydropyran, and dioxane. Particularly suitable ethers are diethyl ether, tetrahydrofuran, and dioxane. Especially suitable is tetrahydrofuran, particularly as a cosolvent. Suitable nitriles are acetonitrile and propionitrile. Acetonitrile is especially suitable.

Preferred solvent mixtures first include binary mixtures of water and an alcohol. Particularly preferred is a binary mixture of water and isopropanol or of water and methanol. Preferred more particularly is a binary mixture of water and isopropanol (2-propanol). Secondly preferred are ternary mixtures of water, an alcohol, and an ether, in which case the mixture of water, isopropanol and tetrahydrofuran is especially preferred.

The polydispersity and the molecular weight of the random free-radical copolymer may be adjusted if desired through the variation of the initiator/monomer ratio, the feed time of the substrates, especially the feed time of the initiator solution in comparison to the feed time of the monomer solution(s), through variation in the alcohol content, more particularly isopropanol content, of the solvent mixture, and through the polymerization concentration. If a short initiator feed and/or a high isopropanol content (regulator or chain-transfer agent) in the solvent mixture is selected, and/or if a low polymerization concentration (high regulator/monomer ratio) is selected, the resulting polydispersities are generally relatively low. In accordance with the invention, the aim is for a very narrow molecular weight distribution, since copolymers with higher molar masses tend to be less water-soluble, meaning that the agrochemical active ingredient compositions sometimes exhibit reduced stability.

Through the use of additional regulators or chain-transfer agents from the group of the mecaptans, such as mercaptoethanol, thioglycerol or 1-dodecyl mercaptan, it is possible, if desired, to achieve a further reduction in the polydispersity of the copolymer. The molar masses M_{w} and Mₙ and also the polydispersity are determined by means of size exclusion chromatography. Calibrating agents that can be used are commercial polystyrene or poly(ethylene oxide) calibration sets.

The copolymer may if desired be isolated and worked up. Workup is accomplished in a known way familiar to the skilled person, as for example by a prior filtration step. This makes it possible optionally to remove the 2-amino-2-methylpropanesulfonic acid byproduct. If desired, the solvent may subsequently be removed. Examples of typical methods of removing the solvent include spray drying, evaporation at reduced pressure, freeze drying, and evaporation under atmospheric pressure with optionally elevated temperature. The methods suitable for drying further include drying in a fluidized bed dryer. Another option is to use the copolymer solution obtainable by the process without workup.

The term **pesticides** identifies at least one active ingredient selected from the group of fungicides, insecticides, nematicides, herbicides, safeners and/or growth regulators. Preferred pesticides are fungicides, insecticides, herbicides, and growth regulators. Particularly preferred pesticides are fungicides. Mixtures of pesticides from two or more of the aforementioned classes may also be used. The skilled person is familiar with such pesticides, which may be found in, for example, Pesticide Manual, 15th Ed. (2009), The British Crop Protection Council, London. Suitable insecticides are insecticides from the classes of the carbamates, organophosphates, organochlorine insecticides, phenylpyrazoles, pyrethroids, neonicotinoids, spinosins, avermectins, milbemycins, juvenile hormone analogs, alkyl halides, organotin compounds, nereistoxin analogs, benzoylureas, diacylhydrazines, METI acaricides, and also insecticides such as chloropicrin, pymetrozine, flonicamide, clofentezine, hexythiazox, etoxazole, diafenthiuron, propargite, tetradifon, chlorfenapyr, DNOC, buprofezine, cyromazine, amitraz, hydramethylnon, acequinocyl, fluacrypyrim, rotenone, or derivatives thereof. Suitable fungicides are fungicides from the classes of the dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzylcarbamates, carbamates, carboxamides, carboxylic amides, chloronitriles, cyanoacetamide oximes, cyanoimidazoles, cyclopropanecarboxamides, dicarboximides, dihydrodioxazines, dinitrophenylcrotonates, dithiocarbamates, dithiolanes, ethylphosphonates, ethylaminothiazolecarboxamides, guanidines, hydroxy(2-amino)pyrimidines, hydroxyanilides, imidazoles, imidazolinones, inorganics, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, and triazoles. Suitable herbicides are herbicides from the classes of the acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ethers, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl (thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, and ureas.

**Water-insoluble pesticides** may have a solubility in water of up to and including 10 g/l at 20°C. Their solubility in water is preferably not more than 1 g/l, more preferably not more than 0.5 g/l. Examples of suitable water-insoluble pesticides (solubility in water at 20°C in each case in parentheses) are pyraclostrobin (1.9 mg/l), epoxiconazole (7 mg/l), prochloraz (34 mg/l), metconazole (30 mg/l), and/or fenpropimorph (4 mg/l).

The water-insoluble pesticide usually has a **melting point** of at least 30°C, preferably of at least 50°C, more preferably of at least 70°C, and very preferably of at least 100°C.

The water-insoluble pesticide is preferably in **dissolved form** in the composition. This means that typically at least 90% by weight, preferably at least 99% by weight, of the water-insoluble pesticide is in dissolved form.

Besides the water-insoluble pesticide, the composition may also comprise **further pesticides.** The further pesticide may be present in dissolved form or in the form of solid particles (e.g., in suspension).

The composition comprises at least one **organic solvent,** as for example one, two, three or four different solvents. The composition preferably comprises at least two organic solvents.

Organic solvents contemplated include solvents such as mineral oil fractions of medium to high boiling point such as kerosene and diesel oil, and also coal tar oils, and also oils of plant or animal origin, aliphatic, cyclic, and aromatic hydrocarbons, e.g., paraffins, tetrahydronaphthalene, alkylated naphthalenes and derivatives thereof, alkylated benzenes and derivatives thereof, alcohols such as methanol, ethanol, propanol, butanol, and cyclohexanol, glycols, ketones such as cyclohexanone and gamma-butyrolactone, dimethyl fatty acid amides, alkylene carbonates, fatty acids, DMSO, alkyl alkanoates; or N-methylpyrrolidone. In principle it is also possible to use solvent mixtures, and also mixtures of the aforementioned organic solvents and water. Preferred organic solvents comprise at least one (preferably at least two) **alkyl alkanoate(s),** such as fatty acid esters, diesters of dibasic acids, esters of hydroxy acids, and diesters of carboxylic acids. The alkyl alkanoate typically comprises at least one C₁-C₃₂ alkyl radical or C₁-C₃₂ alkylene radical. Preferred alkyl alkanoates are diesters of dibasic acids (such as linear or branched di-C₁-C₂₀ alkyl esters of linear, branched or cyclic aliphatic C₄-C₁₈ dibasic acids) and esters of hydroxy acids (such as linear or branched C₁-C₁₈ alkyl esters of linear or branched aliphatic C₃-C₂₀ hydroxy acids). Mixtures of above alkyl alkanoates may also be used.

In another preferred embodiment at least one organic solvent has a solubility in water at 20°C of not more than 10% by weight, preferably not more than 8% by weight, more preferably not more than 6% by weight, and especially not more than 3% by weight.

**Nonionic surfactants** are common knowledge from the prior art. Suitable nonionic surfactants are surfactants from the classes of the alkoxylates, block polymers, N alkylated fatty acid amides, amine oxides, esters or sugar-based surfactants. Examples of alkoxylates are compounds such as alcohols, alkylphenols, amines, amides, arylphenols, fatty acids or fatty acid esters that have been alkoxylated. For the alkoxylation it is possible to use ethylene oxide and/or propylene oxide, preferably ethylene oxide. Examples of N-alkylated fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose esters and glucose esters or alkylpolyglucosides. Suitable block polymers are block polymers of the A-B or A-B-A type, comprising blocks of polyethylene oxide and polypropylene oxide, or of the A-B-C type, comprising alkanol, polyethylene oxide, and polypropylene oxide. Preferred nonionic surfactants are surfactants from the classes of alkoxylates and block polymers, more particularly alkoxylates.

The composition preferably comprises at least 3% by weight, more preferably at least 5% by weight, very preferably at least 8% by weight, and especially at least 10% by weight of the copolymer synthesized from monomers M. The composition may comprise up to 30% by weight, preferably up to 20% by weight, of the copolymer.

The composition preferably comprises at least 20% by weight, more preferably at least 30% by weight, very preferably at least 40% by weight, and especially at least 50% by weight of organic solvent. The composition may comprise up to 90% by weight, preferably up to 80% by weight, of organic solvent.

The composition comprises preferably not more than 8% by weight, more preferably not more than 6% by weight, very preferably not more than 5% by weight, and especially not more than 1 % by weight of water.

The composition comprises preferably at least 3% by weight, more preferably at least 6% by weight, and very preferably at least 9% by weight of water-insoluble pesticide. The composition may comprise up to 50% by weight, preferably up to 30% by weight, and more preferably up to 20% by weight of water-insoluble pesticide.

The composition preferably comprises at least 3% by weight, more preferably at least 6% by weight, very preferably at least 9% by weight, and especially at least 15% by weight of nonionic surfactant. The composition can comprise up to 80% by weight, preferably up to 50% by weight, more preferably up to 25% by weight of nonionic surfactant.

The composition comprises preferably
a) at least 3% by weight of copolymer synthesized from monomers M;
b) at least 20% by weight of organic solvent;
c) not more than 6% by weight of water;
d) at least 3% by weight of the water-insoluble pesticide; and
e) at least 3% by weight of nonionic surfactant.

The composition comprises more preferably
a) 2-20% by weight of copolymer synthesized from monomers M;
b) 20-70% by weight of organic solvent;
c) not more than 6% by weight of water;
d) 1-25% by weight of the water-insoluble pesticide; and
e) 3-50% by weight of nonionic surfactant.

The **weight ratio** of copolymer to water-insoluble pesticide can be situated in the range from 10 : 1 to 1 : 10, preferably from 5 : 1 to 1 : 5, more preferably from 2 : 1 to 1 : 2.

The composition is typically a liquid composition, as for example an organic solution.

The composition of the invention may comprise **formulating assistants,** in which case the choice of assistants is governed typically by the specific application form and/or active ingredient. Examples of suitable formulating assistants are solvents, surface-active compounds (such as surfactants, protective colloids, wetting agents, and adhesive agents), organic and inorganic thickeners, bactericides, optionally colorants, and adhesives (e.g., for seed treatment).

Surface-active compounds contemplated (adjuvants, wetters, stickers, dispersants or emulsifiers) include the alkali metal, alkaline earth metal, and ammonium salts of aromatic sulfonic acids, e.g., of ligno- (Borresperse^{®} products, Borregaard, Norway), phenol-, naphthalene- (Morwet^{®} products, Akzo Nobel, USA), and dibutylnaphthalene-sulfonic acid (Nekal^{®} products, BASF, Germany), and also of fatty acids, alkylsulfonates and alkylarylsulfonates, alkyl, lauryl ether, and fatty alcohol sulfates, and also salts of sulfated hexa-, hepta- and octadecanols, and also of fatty alcohol glycol ethers, condensation products of sulfonated naphthalene and its derivatives with formaldehyde, condensation products of naphthalene or of naphtalenesulfonic acids with phenol and formaldehyde, polyoxyethyleneoctyl phenol ethers, ethoxylated isooctylphenol, octylphenol or nonylphenol, alkylphenyl and tributylphenyl polyglycol ethers, alkylaryl polyether alcohols, isotridecyl alcohol, fatty alcohol ethylene oxide condensates, ethoxylated castor oil, polyoxyethylene- or polyoxypropylene-alkyl ethers, lauryl alcohol polyglycol ether acetate, sorbitol esters, lignin-sulfite waste liquors, and also proteins, denatured proteins, polysaccharides (e.g., methylcellulose), hydrophobically modified starches, polyvinyl alcohol (Mowiol^{®} products, Clariant, Switzerland), polycarboxylates (Sokalan^{®} products, BASF, Germany), polyalkoxylates, polyvinylamine (Lupamin^{®} products, BASF, Germany), polyethylenimine (Lupasol^{®} products, BASF, Germany), polyvinylpyrrolidone, and copolymers thereof.

Suitable thickeners are compounds which give the formulation a modified rheology, i.e., a high viscosity in the state of rest and low viscosity in the state of movement. Examples are polysaccharides, proteins (such as casein or gelatin), synthetic polymers or inorganic layered minerals. Thickeners of these kinds are available commercially, examples being xanthan gum (Kelzan^{®}, CP Kelco, USA), Rhodopol^{®} 23 (Rhodia, France) or Veegum^{®} (R.T. Vanderbilt, USA) or Attaclay^{®} (Engelhard Corp., NJ, USA). The amount of thickener in the formulation is governed by the efficacy of the thickener. The skilled person will select an amount in order to obtain the desired viscosity of the formulation. The amount will usually be 0.01 to 10% by weight. Bactericides may be added to stabilize the composition. Examples of bactericides are those based on dichlorophen and benzyl alcohol hemiformal, and also on isothiazolinone derivatives such as alkylisothiazolinones and benzisothiazolinones (Acticide^{®} MBS from Thor Chemie).

In one preferred embodiment the compositions of the invention are in the form of an agrochemical formulation. The composition is preferably in the form of an emulsifiable concentrate (EC) or an oil dispersion (OD).

The agrochemical formulation is usually diluted before application to prepare what is called a **tank mix.** Contemplated for dilution are mineral oil fractions of medium to high boiling point, such as kerosene or diesel oil, and also coal tar oils, and also oils of plant or animal origin, aliphatic, cyclic, and aromatic hydrocarbons, e.g., toluene, xylene, paraffin, tetrahydronaphthalene, alkylated naphthalenes or derivatives thereof, methanol, ethanol, propanol, butanol, cyclohexanol, cyclohexanone, isophorone, strongly polar solvents, e.g., dimethyl sulfoxide, N-methylpyrrolidone or water. It is preferred to use water.

The diluted composition is typically applied by spraying or fogging. The tank mix may be admixed with oils of various types, wetting agents, adjuvants, herbicides, bactericides, and/or fungicides immediately prior to application (tank mix). These additions may be admixed to the compositions of the invention in a weight ratio of 1:100 to 100:1, preferably 1:10 to 10:1. The pesticide concentration in a tank mix may be varied within relatively wide ranges. Generally speaking it is between 0.0001 % and 10%, preferably between 0.01% and 1%. The application rates for use in crop protection vary according to the nature of the desired effect and are between 0.01 and 2.0 kg of active ingredient per ha.

The invention further provides a process for **preparing** the composition of the invention, by contacting the copolymer, the organic solvent, the water-insoluble pesticide, optionally water, and the nonionic surfactant. The components can be contacted with one another by methods which are general knowledge, such as mixing, emulsifying or suspending.

The invention further provides a **method for controlling** phytopathogenic fungi and/or unwanted plant growth and/or unwanted insect or mite infestation and/or for regulating the growth of plants, where the composition of the invention is caused to act on the respective pests, their habitat or the plants to be protected from the respective pest, to the soil and/or to unwanted plants and/or the crop plants and/or their habitat. The invention additionally provides for the use of the composition of the invention for controlling phytopathogenic fungi and/or unwanted plant growth and/or unwanted insect or mite infestation and/or for regulating the growth of plants, where the composition is caused to act on the respective pests, their habitat or the plants to be protected from the respective pest, to the soil and/or to unwanted plants and/or the crop plants and/or their habitat.

Examples of suitable crop plants are cereals, for example wheat, rye, barley, triticale, oats or rice; beet, for example sugar or fodder beet; pome fruit, stone fruit and soft fruit, for example apples, pears, plums, peaches, almonds, cherries, strawberries, raspberries, currants or gooseberries; legumes, for example beans, lentils, peas, lucerne or soybeans; oil crops, for example oilseed rape, mustard, olives, sunflowers, coconut, cacao, castor beans, oil palm, peanuts or soybeans; cucurbits, for example pumpkins/squash, cucumbers or melons; fiber crops, for example cotton, flax, hemp or jute; citrus fruit, for example oranges, lemons, grapefruit or tangerines; vegetable plants, for example spinach, lettuce, asparagus, cabbages, carrots, onions, tomatoes, potatoes, pumpkin/squash or capiscums; plants of the laurel family, for example avocados, cinnamon or camphor; energy crops and industrial feedstock crops, for example maize, soybeans, wheat, oilseed rape, sugar cane or oil palm; maize; tobacco; nuts; coffee; tea; bananas; wine (dessert grapes and grapes for vinification); hops; grass, for example turf; sweetleaf (*Stevia rebaudania*); rubber plants; ornamentals and forest plants, for example flowers, shrubs, deciduous trees and coniferous trees, and the propagation material, for example seeds, and the harvested produce of these plants.

The term crop plants also includes those plants which have been modified by breeding, mutagenesis or recombinant methods, including the biotechnological agricultural products which are on the market or in the process of being developed. Genetically modified plants are plants whose genetic material has been modified in a manner which does not occur under natural conditions by hybridizing, mutations or natural recombination (i.e., recombination of the genetic material). Here, one or more genes will, as a rule, be integrated into the genetic material of the plant in order to improve the plant's properties. Such recombinant modifications also comprise posttranslational modifications of proteins, oligo- or polypeptides, for example by means of glycosylation or binding of polymers such as, for example, prenylated or farnesylated residues or PEG residues.

The invention further provides a plant propagation material, such as seed, comprising the composition of the invention. Plant propagation materials may be treated preventively together with or even before sowing, or together with or even before transplanting, with the composition of the invention. These compositions may be applied neat or, preferably, diluted to the propagation materials, more particularly seed. In the case of dilution, the composition in question may be diluted 2 to 10 times, and so the compositions used for dressing comprise 0.01 % to 60% by weight, preferably 0.1 % to 40% by weight, of active ingredient. Application may take place before or during sowing. The treatment of plant propagation material, more particularly the treatment of seed, is known to the skilled person, and is accomplished by dusting, coating, pelletizing, dipping or soaking the plant propagation material, with treatment taking place preferably by pelletizing, coating and dusting or by in-furrow treatment, so that, for example, premature germination of the seed is prevented. For the treatment of seed it is preferred to use suspensions. Such compositions comprise typically 1 to 800 g/l active ingredient, 1 to 200 g/l surfactants, 0 to 200 g/l antifreeze agents, 0 to 400 g/l binders, 0 to 200 g/l colorants, and solvents, preferably water.

**Advantages** of the invention are that the water-insoluble pesticides are very well stabilized in the composition. They crystallize only very slowly. Even at low temperatures there is virtually no crystallization of the water-insoluble pesticides. Even after dilution with water, for producing the tank mix, the pesticides show virtually no crystallization. The composition allows a high concentration of copolymer, this being advantageous in order to retard crystallization. The composition also permits a high concentration of water-insoluble pesticides.

Examples below illustrate the invention without restricting it.

### Examples

Metconazole: Mp 100-108°C, solubility in water 30 mg/l (20°C).
Epoxiconazole: Mp 136-137°C, solubility in water 7 mg/l (20°C).
Fluxapyroxad: Mp 157°C, solubility in water 3.8 mg/l (20°C).
Fenpropimorph: Mp -47 - -41 °C, solubility in water 4 mg/l (20°C).
Polymer A: Random copolymer synthesized from the monomers methyl methacrylate (50% by weight), dodecyl acrylate (7% by weight), tetradecyl acrylate (6% by weight), and AMPS (37% by weight).
Surfactant A: liquid nonionic surfactant based on alkoxylated linear fatty alcohol, surface tension around 29 mN/m.
Surfactant B: liquid nonionic surfactant, castor oil ethoxylate, HLB value 10-11.
Surfactant C: liquid nonionic surfactant, ethoxylated (10 EO) tristyrylphenol, HLB value 10.4.
Surfactant D: liquid nonionic surfactant based on alkoxylated linear fatty alcohol, surface tension around 30 mN/m.
Surfactant E: liquid nonionic surfactant, alkyl polyethylene glycol ether based on a short-chain, saturated synthetic fatty alcohol, surface tension around 26 mN/m.
Surfactant F: liquid nonionic surfactant, Polysorbate 20.
Surfactant G: liquid nonionic surfactant, polyoxyethylenesorbitol hexaoleate, dynamic viscosity around 200 mPas (25°C).
Surfactant H: liquid nonionic surfactant based on alkoxylated linear fatty alcohol, surface tension around 30 mN/m.
Surfactant I: liquid nonionic surfactant based on alkoxylated linear fatty alcohol, surface tension around 32 mN/m.
Surfactant J: liquid nonionic surfactant based on ethoxylated branched aliphatic alcohol, surface tension around 28 mN/.
Surfactant K: liquid nonionic surfactant, ethoxylated tristyrylphenol, HLB value 12-13.
Surfactant L: liquid anionic surfactant, ethoxylated tristyrylphenol phosphate, HLB value around 16.
Solvent A: Mixture of dimethyl glutarate (63-71%), dimethyl succinate (19-29%), and dimethyl adipate (6-14%), 5.7% by weight solubility in water.
Solvent B: 2-ethyxlhexyl (*S*)-lactate, 0.03 g/100 ml water-soluble.
Solvent C: Diisononyl 1,2-cyclohexanedicarboxylate, < 0.02 mg/l water-soluble.
Solvent D: Jeffsol® AG 1505, alkylene carbonate, B.p. 244°C, 7.2% by weight solubility in water, available commercially from Huntsman.
Solvent E: DMSO, infinitely miscible with water.
Solvent F: 2-ethylhexyl lactate, 0,03 g/100 ml water-soluble.
Solvent G: gamma-butyrolactone, infinitely miscible with water.
Solvent H: N,N-dimethyldodecylamide.

The surface tension of the surfactant can be determined in accordance with DIN14370 (1 g/l, distilled water, 23°C) or DIN53914 (1 g/l, distilled water, 23°C).

### Example 1 - Fluxapyroxad + Metconazole + Fenpropimorph

The emulsifiable concentrates were prepared by mixing the components as per Table 1 with stirring, adding the active ingredients last. The mixture was stirred at 50°C with high energy input at least for 30 minutes.

**Table 1: Emulsifiable concentrates A-C comprising 42 g/l fluxapyroxad, 42 g/l epoxiconazole, 200 g/l fenpropimorph, and the following assistants (amounts in g/l).**

| | A | B | C |
|---|---|---|---|
| Surfactant A | 250 | 250 | 150 |
| Surfactant B | 70 | 70 | |
| Polymer A | 120 | 120 | 120 |
| Water | 50 | | |
| Solvent A | to 1.0 L | | |
| Solvent B | | to 1.0 I | to 1.0 I |
| Solvent C | | | 150 |
| Solvent H | 70 | 70 | 100 |

### Example 2 - Fluxapyroxad + Metconazole

The emulsifiable concentrates were prepared by mixing the components as per Table 2 with stirring, adding the active ingredients last. The mixture was stirred at 50°C with high energy input at least for 30 minutes.

**Table 2: Emulsifiable concentrates E-H comprising 62.5 g/l fluxapyroxad, 45 g/l metconazole and the following assistants (amounts in g/l).**

| | E | F | G | H |
|---|---|---|---|---|
| Surfactant A | 197 | | | |
| Surfactant C | | | | 50 |
| Surfactant D | 250 | 250 | | |
| Surfactant E | 50 | 100 | | |
| Surfactant F | 50 | | | |
| Surfactant G | | 50 | | |
| Surfactant H | | | 100 | 150 |
| Surfactant I | | | 100 | 150 |
| Surfactant J | | | 50 | |
| Surfactant K | | | 50 | |
| Surfactant L | | | | 50 |
| Polymer A | 100 | 100 | 50 | 50 |
| Solvent B | to 1.0 I | to 1.0 I | | |
| Solvent D | 50 | | | |
| Solvent E | | | 50 | |
| Solvent F | | | to 1.0 I | to 1.0 I |
| Solvent G | | | | 120 |

### Example 3 - Metconazole + Epoxiconazole

The emulsifiable concentrates were prepared by mixing the components as per Table 3 with stirring, adding the active ingredients last. The mixture was stirred at 50°C with high energy input at least for 30 minutes.

**Table 3: Emulsifiable concentrate I comprising 41 g/l metconazole, 56 g/l epoxiconazole and the following assistants (amounts in g/l).**

| | I |
|---|---|
| Surfactant D | 100 |
| Polymer A | 100 |
| Solvent B | to 1.0 I |
| Solvent C | 150 |
| Solvent H | 100 |

### Example 4 - Metconazole + Epoxiconazole + Fenpropimorph

The emulsifiable concentrates were prepared by mixing the components as per Table 4 with stirring, adding the active ingredients last. The mixture was stirred at 50°C with high energy input at least for 30 minutes.

**Table 4: Emulsifiable concentrate J comprising 27.5 g/l metconazole, 37.5 g/l epoxiconazole, 200 g fenpropimorph and the following assistants (amounts in g/l).**

| | J |
|---|---|
| Surfactant E | 140 |
| Surfactant D | to 1.0 I |
| Polymer A | 120 |
| Water | 50 |
| Solvent A | 100 |

### Example 5 - Comparative examples (not inventive)

Comparative examples C-A to C-J were prepared in the same way as for emulsifiable concentrates A to J, but without addition of any polymer A. So that the relative weight fractions in the comparative examples are identical to those for batches A to J, the solvent was made up not to 1.0 I, but instead to a volume slightly reduced accordingly. All other parameters were retained.

### Example 6 - Shelf life

For the purpose of assessing the shelf life, the samples of batches A to J (Examples 1 to 4) and of Comparative examples C-A to C-J (Example 5) were stored for 7 days at -5°C, 0 C or 10°C. The samples were subsequently inspected for formation of crystals (Table 5, "+" = crystals visible, "-" = no crystals visible).

**Table 5: Formation of crystals during storage**

| | -5°C | 0°C | 10°C |
|---|---|---|---|
| Example 1 A | - | - | - |
| Example 1 B | - | - | - |
| Example 1 C | - | - | - |
| Example 2 D | - | - | - |
| Example 2 E | - | - | - |
| Example 2 F | - | - | - |
| Example 2 G | - | - | - |
| Example 2 H | - | - | - |
| Example 3 I | - | - | - |
| Example 4 J | - | - | - |
| Comparative example 1 A | + | + | - |
| Comparative example 1 B | + | + | - |
| Comparative example 1 C | + | + | - |
| Comparative example 2 D | + | + | + |
| Comparative example 2 E | + | + | + |
| Comparative example 2 F | + | + | + |
| Comparative example 2 G | + | + | + |
| Comparative example 2 H | + | + | + |
| Comparative example 3 I | + | + | + |
| Comparative example 4 J | + | + | + |

### Example 7 - Stability of the diluted samples in the spray tank

The test below was used to investigate whether the emulsifiable concentrates, following dilution to a sprayable concentration, can be used in standard sprayers without clogging the filters of the spraying machine or the spraying nozzles.

The test machine was a hydraulic sprayer with a 195 I tank, a four-piston membrane pump (at 3 bar pressure) and a spraying lance with 6 standard nozzles (type: LU 90-03). Nozzle filters used were four mesh filters (25, 50, 60, and 80 mesh), a 60-mesh mesh filter with integrated seal, and a 25-mesh slot filter.
The suction filter and the pressure filter were each 50-mesh mesh filters.

The tank was first filled with 75 I of water and thereafter the 3 I of an emulsifiable concentrate (batch A to J from Examples 1 to 4). The mixture was mixed with a piston pump (stirring intensity: about 45 l/min) and subsequently the tank was filled up with a further 75 I of water. After pumped circulation for 15 minutes (stirring intensity: about 45 l/min) of the product mixture, the spray solution was sprayed out of the tank through the nozzles. During the test, the temperature of the spray mixture in the tank was kept constant at between 5 and 10°C in order to simulate cold well water. The delivery test was repeated 3 times; for at least one repetition, the product mixture must spend the night in the tank. At the end of this procedure, the filters ahead of and downstream of the pump (suction filter and pressure filter) and the filters in the nozzles (nozzle filters) were examined for residues. Table 6 summarizes the results. In the table, "clogged" means that at least one of the filters (suction, pressure or nozzle filters) showed significant fouling, causing a reduction in flow or clogging. "Free" in the table means that no significant fouling was found.

**Table 6:**

| Emulsifiable concentrate | Filter |
|---|---|
| Example 1 A | free |
| Example 1 B | free |
| Example 1 C | free |
| Example 2 D | free |
| Example 2 E | free |
| Example 2 F | free |
| Example 2 G | free |
| Example 2 H | free |
| Example 3 I | free |
| Example 4 J | free |
| Comparative example 1 A | clogged |
| Comparative example 1 B | clogged |
| Comparative example 1 C | clogged |
| Comparative example 2 D | clogged |
| Comparative example 2 E | clogged |
| Comparative example 2 F | clogged |
| Comparative example 2 G | clogged |
| Comparative example 2 H | clogged |
| Comparative example 3 I | clogged |
| Comparative example 4 J | clogged |

## Claims

1. A composition comprising
a) at least 1% by weight of copolymer synthesized from monomers M comprising
i) at least one ethylenically unsaturated monomer M1 containing sulfonic acid groups,
ii) at least one monomer M2 selected from C₁-C₄ alkyl (meth)acrylates, and
iii) at least one monomer M3 selected from C₆-C₂₂ alkyl (meth)acrylates;
b) at least 10% by weight of organic solvent;
c) not more than 10% by weight of water;
d) at least 1 % by weight of water-insoluble pesticide in dissolved form, wherein the water-insoluble pesticide has a solubility in water of up to and including 10 g/l at 20 °C; and
e) at least 1 % by weight of nonionic surfactant.

2. The composition according to claim 1, wherein monomer M2 is selected from C₁-C₂ alkyl (meth)acrylates.

3. The composition according to claim 1 or 2, wherein the monomers M comprise from 1 % to 50% by weight of monomer M3, based on the total weight of the monomers M.

4. The composition according to any of claims 1 to 3, wherein the monomers M comprise from 1 % to 60% by weight of monomer M1, based on the total weight of the monomers M.

5. The composition according to any of claims 1 to 4, wherein the monomers M comprise
i) 1 to 60% by weight of monomer M1,
ii) 10 to 90% by weight of monomer M2, and
iii) 1 to 50% by weight of monomer M3,
based on the total weight of the monomers M.

6. The composition according to any of claims 1 to 5, wherein the water-insoluble pesticide has a melting point of at least 30°C.

7. The composition according to any of claims 1 to 6, comprising at least 5% by weight of the copolymer.

8. The composition according to any of claims 1 to 7, wherein the weight ratio of copolymer to water-insoluble pesticide is in the range from 5 : 1 to 1 : 5.

9. The composition according to any of claims 1 to 8, comprising at least two organic solvents.

10. The composition according to any of claims 1 to 9, wherein at least one organic solvent is soluble to an extent of not more than 10% by weight in water at 20°C.

11. The composition according to any of claims 1 to 10, wherein the organic solvent comprises at least one alkyl alkanoate.

12. The composition according to any of claims 1 to 11, comprising at least 5% by weight of the water-insoluble pesticide,

13. The composition according to any of claim 11, wherein the organic solvent comprises at least two alkyl alkanoates selected from linear or branched di-C₁-C₂₀ alkyl esters of linear, branched or cyclic aliphatic C₄-C₁₈ dibasic acids, and linear or branched C₁-C₁₆ alkyl esters of linear or branched aliphatic C₃-C₂₀ hydroxy acids.

14. A process for preparing the composition according to any of claims 1 to 12 by contacting the copolymer, the organic solvent, the water-insoluble pesticide, and the nonionic surfactant.

15. A method for controlling phytopathogenic fungi and/or unwanted plant growth and/or unwanted insect or mite infestation and/or for regulating the growth of plants, wherein the composition according to any of claims 1 to 12 is caused to act on the respective pests, their habitat or the plants to be protected from the respective pest, to the soil and/or to unwanted plants and/or the crop plants and/or their habitat.

16. A plant propagation material comprising the composition according to any of claims 1 to 12.

## Patentansprüche

1. Zusammensetzung, umfassend
a) mindestens 1 Gew.-% Copolymer, synthetisiert aus Monomeren M umfassend
i) mindestens ein ethylenisch ungesättigtes Monomer M1, welches Sulfonsäuregruppen enthält,
ii) mindestens ein Monomer M2 ausgewählt aus C₁-C₄-Alkyl (Meth)acrylaten und
iii) mindestens ein Monomer M3 ausgewählt aus C₆-C₂₂-Alkyl(meth)acrylaten,
b) mindestens 10 Gew.-% organisches Lösungsmittel,
c) nicht mehr als 10 Gew.-% Wasser,
d) mindestens 1 Gew.-% wasserunlösliches Pestizid in gelöster Form, wobei das wasserunlösliche Pestizid eine Löslichkeit in Wasser von bis zu und einschließlich 10 g/l bei 20°C aufweist, und
e) mindestens 1 Gew.-% nichtionisches Tensid.

2. Zusammensetzung nach Anspruch 1, wobei Monomer M2 aus C₁-C₂-Alkyl(meth)acrylaten ausgewählt ist.

3. Zusammensetzung nach Anspruch 1 oder 2, wobei die Monomere M 1 Gew.-% bis 50 Gew.-% Monomer M3 umfassen, basierend auf dem Gesamtgewicht der Monomere M.

4. Zusammensetzung nach einem der Ansprüche 1 bis 3, wobei die Monomere M 1 Gew.-% bis 60 Gew.-% Monomer M1 umfassen, basierend auf dem Gesamtgewicht der Monomere M.

5. Zusammensetzung nach einem der Ansprüche 1 bis 4, wobei die Monomere M
i) 1 bis 60 Gew.-% Monomer M1,
ii) 10 bis 90 Gew.-% Monomer M2 und
iii) 1 bis 50 Gew.-% Monomer M3
umfassen, basierend auf dem Gesamtgewicht der Monomere M.

6. Zusammensetzung nach einem der Ansprüche 1 bis 5, wobei das wasserunlösliche Pestizid einen Schmelzpunkt von mindestens 30°C aufweist.

7. Zusammensetzung nach einem der Ansprüche 1 bis 6, welche mindestens 5 Gew.-% des Copolymers umfasst.

8. Zusammensetzung nach einem der Ansprüche 1 bis 7, wobei das Gewichtsverhältnis von Copolymer zum wasserunlöslichen Pestizid im Bereich von 5:1 bis 1:5 liegt.

9. Zusammensetzung nach einem der Ansprüche 1 bis 8, welche mindestens zwei organische Lösungsmittel umfasst.

10. Zusammensetzung nach einem der Ansprüche 1 bis 9, wobei mindestens ein organisches Lösungsmittel zu nicht mehr als 10 Gew.-% in Wasser bei 20°C löslich ist.

11. Zusammensetzung nach einem der Ansprüche 1 bis 10, wobei das organische Lösungsmittel mindestens ein Alkylalkanoat umfasst.

12. Zusammensetzung nach einem der Ansprüche 1 bis 11, welche mindestens 5 Gew.-% des wasserunlöslichen Pestizids umfasst.

13. Zusammensetzung nach einem der Ansprüche 11, wobei das organische Lösungsmittel mindestens zwei aus geradkettigen oder verzweigten Di-C₁-C₂₀-alkylestern von geradkettigen, verzweigten oder cyclischen aliphatischen dibasischen C₄-C₁₈-Säuren und geradkettigen oder verzweigen C₁-C₁₈-Alkylestern von geradkettigen oder verzweigten aliphatischen C₃-C₂₀-Hydroxysäuren ausgewählte Alkylalkanoate umfasst.

14. Verfahren zur Herstellung der Zusammensetzung nach einem der Ansprüche 1 bis 12 durch Inkontaktbringen des Copolymers, des organischen Lösungsmittels, des wasserunlöslichen Pestizids und des nichtionischen Tensids.

15. Verfahren zur Bekämpfung phytopathogener Pilze und/oder unerwünschten Pflanzenwuchses und/oder unerwünschten Insekten- oder Milbenbefalls und/oder zum Steuern des Wachstums von Pflanzen, bei dem man die Zusammensetzung nach einem der Ansprüche 1 bis 12 auf die betreffenden Schädlinge, deren Lebensraum oder die gegen den betreffenden Schädling zu schützenden Pflanzen, auf den Boden und/oder auf unerwünschte Pflanzen und/oder die Kulturpflanzen und/oder ihren Lebensraum einwirken lässt.

16. Pflanzenfortpflanzungsmaterial, welches die Zusammensetzung nach einem der Ansprüche 1 bis 12 umfasst.

## Revendications

1. Composition comprenant
a) au moins 1% en poids d'un copolymère synthétisé à partir de monomères M comprenant :
i) au moins un monomère éthyléniquement insaturé M1 contenant des groupements acide sulfonique,
ii) au moins un monomère M2 choisi parmi les (méth)acrylates de C₁-C₄alkyle, et
iii) au moins un monomère M3 choisi parmi les (méth)acrylates de C₆-C₂₂alkyle ;
b) au moins 10% en poids d'un solvant organique ;
c) pas plus de 10% en poids d'eau ;
d) au moins 1% en poids d'un pesticide insoluble dans l'eau sous forme dissoute, où le pesticide insoluble dans l'eau possède une solubilité dans l'eau jusqu'à et incluant 10 g/l à 20°C ; et
e) au moins 1% en poids d'un agent tensioactif non ionique.

2. Composition selon la revendication 1, dans laquelle le monomère M2 est choisi parmi les (méth)acrylates de C₁-C₂alkyle.

3. Composition selon la revendication 1 ou 2, dans laquelle les monomères M comprennent de 1% à 50% en poids de monomère M3, sur la base du poids total des monomères M.

4. Composition selon l'une quelconque des revendications 1 à 3, dans laquelle les monomères M comprennent de 1% à 60% en poids de monomère M1, sur la base du poids total des monomères M.

5. Composition selon l'une quelconque des revendications 1 à 4, dans laquelle les monomères M comprennent
i) de 1 à 60% en poids de monomère M1,
ii) de 10 à 90% en poids de monomère M2, et
iii) de 1 à 50% en poids de monomère M3,
sur la base du poids total des monomères M.

6. Composition selon l'une quelconque des revendications 1 à 5, dans laquelle le pesticide insoluble dans l'eau possède un point de fusion d'au moins 30°C.

7. Composition selon l'une quelconque des revendications 1 à 6, comprenant au moins 5% en poids du copolymère.

8. Composition selon l'une quelconque des revendications 1 à 7, dans laquelle le rapport pondéral du copolymère au pesticide insoluble dans l'eau se trouve dans la plage allant de 5:1 à 1:5.

9. Composition selon l'une quelconque des revendications 1 à 8, comprenant au moins deux solvants organiques.

10. Composition selon l'une quelconque des revendications 1 à 9, dans laquelle au moins un solvant organique est soluble jusqu'à un niveau non supérieur à 10% en poids dans l'eau à 20°C.

11. Composition selon l'une quelconque des revendications 1 à 10, dans laquelle le solvant organique comprend au moins un alcanoate d'alkyle.

12. Composition selon l'une quelconque des revendications 1 à 11, comprenant au moins 5% en poids du pesticide insoluble dans l'eau.

13. Composition selon l'une quelconque des revendications 11, dans laquelle le solvant organique comprend au moins deux alcanoates d'alkyle choisis parmi les esters de di-C₁-C₂₀alkyle linéaires ou ramifiés d'acides dibasiques en C₄-C₁₈ linéaires, ramifiés ou cycliques aliphatiques, et les esters de C₁-C₁₈alkyle linéaires ou ramifiés d'acides hydroxylés en C₃-C₂₀ linéaires ou ramifiés aliphatiques.

14. Procédé de préparation de la composition selon l'une quelconque des revendications 1 à 12, par la mise en contact du copolymère, du solvant organique, du pesticide insoluble dans l'eau et de l'agent tensioactif non ionique.

15. Méthode de contrôle de champignons phytopathogènes et/ou de croissance végétale non désirée et/ou d'une infestation non désirée par des insectes ou des acariens et/ou de régulation de la croissance de plantes, où on provoque l'agissement de la composition selon l'une quelconque des revendications 1 à 12 sur les nuisibles respectifs, leur habitat ou les plantes à protéger contre les nuisibles respectifs, sur le sol et/ou sur les plantes non désirées et/ou les plantes de culture et/ou leur habitat.

16. Matériel de propagation végétal, comprenant la composition selon l'une quelconque des revendications 1 à 12.
